## Europäisches Patentamt
## European Patent Office
## Office européen des brevets

(19)

(11) Numéro de publication : **0 167 424**
**B1**

(12) # FASCICULE DE BREVET EUROPÉEN

(45) Date de publication du fascicule du brevet :
17.05.89

(51) Int. Cl.⁴ : **G 02 F   1/137**

(21) Numéro de dépôt : **85401013.9**

(22) Date de dépôt : **22.05.85**

(54) **Afficheur dichroïque à cristal liquide à fort contraste lumineux.**

(30) Priorité : 30.05.84 FR 8408547

(43) Date de publication de la demande :
08.01.86 Bulletin 86/02

(45) Mention de la délivrance du brevet :
17.05.89 Bulletin 89/20

(84) Etats contractants désignés :
CH DE GB IT LI NL

(56) Documents cités :
SOLID STATE DEVICES, 1977, Conference Series no.
40, (ESS DERC), Brighton, 12-15 septembre 1977,
pages 65-86, The Institute of Physics, Bristol, GB; T.J.
SCHEFFER: "Electrically controlled colour filters
using liquid crystals"

(73) Titulaire : **COMMISSARIAT A L'ENERGIE ATOMIQUE**
**31/33, rue de la Fédération**
**F-75015 Paris (FR)**

(72) Inventeur : **Clerc, Jean-Frédéric**
**10, Allée du Pré Blanc**
**F-38240 Meylan (FR)**
Inventeur : **Muller, Francis**
**160, Avenue Victor Hugo**
**F-38170 Seyssinet -Pariset (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

EP 0 167 424 B1

## Description

La présente invention a pour objet un afficheur dichroïque à cristal liquide à transition de phase cholestérique-homéotrope. Elle a pour but un meilleur contraste de ces afficheurs utilisés en réflexion.

Une cellule à cristal liquide comprend deux parois séparées par une cale d'épaisseur entre lesquelles est inséré un film de cristal liquide, une paroi portant des électrodes transparentes et l'autre paroi une contre-électrode.

Les afficheurs dichroïques sont des cellules à cristal liquide dans lesquelles des colorants sont dissous dans le film de cristal liquide. Ces colorants sont des molécules de forme allongée, dont le moment de transition est généralement dirigé le long de l'axe de la molécule. Ils absorbent la composante de la lumière dont le vecteur de polarisation est dirigé parallèlement à cet axe à l'exclusion des composantes orthogonales.

On connaît un premier type d'afficheur dichroïque, dit cellule de Heilmeier, présentant une transition de phase homéotrope-planaire.

Dans la phase homéotrope, les molécules de cristal liquide et de colorant sont perpendiculaires aux parois de la cellule. Une lumière incidente traversant la cellule est donc transmise sans absorption.

Dans la phase planaire, les molécules de cristal liquide et de colorant s'alignent selon une direction unique contenue dans un plan parallèle aux parois. Elles absorbent donc la lumière incidente. Cette absorption ne se fait que selon une direction qui est celle du grand axe des molécules de colorant. Pour maximiser l'absorption, il est donc nécessaire de prévoir un polariseur au-dessus de la cellule pour que la lumière incidente soit polarisée rectilignement et parallèlement à l'axe des molécules de colorant avant de traverser la cellule.

Dans le cas où une telle cellule est utilisée en réflexion, la paroi inférieure doit être recouverte d'une couche métallique pour que la lumière réfléchie garde sa polarisation rectiligne afin d'être absorbée au retour.

Le polariseur, par son absorption, limite la brillance de l'afficheur. De plus, le coût de ce polariseur et sa mauvaise tenue aux températures élevées (environ 90°) et aux atmosphères humides rendent cet afficheur peu satisfaisant.

On connaît un autre type d'afficheur dichroïque ne nécessitant pas de polariseur. Cet afficheur, dit cellule de White-Taylor (cf. « Solid State Devices », 1987, Conf. Series n° 40, pages 65-86), utilise une transition de phase cholestérique-homéotrope.

Dans une cellule de ce type, on utilise un cristal liquide cholestérique, c'est-à-dire un cristal liquide dont les molécules sont chirales, mélangé à un colorant. L'ensemble possède une structure hélicoïdale. Les molécules de colorant s'orientent suivant la direction des molécules du cristal liquide et se présentent donc successivement dans toutes les directions. La lumière traversant la cellule est ainsi absorbée quelle que soit sa polarisation.

Cette cellule est de préférence utilisée en réflexion car la lumière traversant deux fois le film de cristal liquide est mieux absorbée et le contraste est donc amélioré.

Il est communément admis que le fond de la cellule sur lequel la lumière incidente va se réfléchir doit être diffusant et ne pas préserver la polarisation de la lumière incidente. Ces diffuseurs sont souvent externes à la cellule, ils sont réalisés par exemple en papier ou en oxyde de manganèse.

Le rôle du diffuseur est donc dans ce cas de donner, après diffusion, une polarisation aléatoire à la lumière réfléchie.

L'invention propose au contraire d'utiliser comme couche de réflexion de la lumière une couche de type métallique, c'est-à-dire conservant la polarisation d'une onde polarisée rectilignement mais inversant la polarisation d'une onde polarisée circulairement. Ceci permet d'améliorer nettement le contraste de l'afficheur. Cependant, cette amélioration n'est pas obtenue pour toutes les cellules mais seulement dans le cas où l'anisotropie optique et le pas de la structure torsadée du cristal liquide prennent des valeurs particulières.

De manière précise, l'invention a pour objet un afficheur dichroïque à cristal liquide à fort contraste lumineux comprenant un film de cristal liquide entre deux parois séparées par une cale d'épaisseur, une paroi portant des électrodes transparentes et l'autre paroi une contre-électrode, ledit film de cristal liquide ayant une anisotropie optique Δn et, en l'absence de champ électrique, une structure en torsade de pas p, la paroi portant la contre-électrode étant au moins partiellement recouverte par une couche réfléchissante inversant la polarisation d'une onde électromagnétique polarisée circulairement et l'anisotropie optique Δn et le pas p étant tels qu'après une traversée du film de cristal liquide le mode de polarisation de l'onde lumineuse le moins absorbé par l'afficheur a une ellipticité au moins égale à $\pi/8$.

Une onde d'ellipticité égale à $\pi/8$ est à mi-chemin entre une onde rectiligne (ellipticité nulle) et une onde circulaire (ellipticité égale à $\pi/4$).

Selon un mode de réalisation préféré de l'afficheur dichroïque de l'invention, la couche réfléchissante est constituée par la contre-électrode.

De manière préférée, le film de cristal liquide de l'afficheur dichroïque de l'invention comprend un mélange de cristal liquide nématique, de molécules dichroïques et d'un composé chiral.

Selon une caractéristique secondaire, le composé chiral est un cristal liquide cholestérique.

Selon une autre caractéristique secondaire, les molécules dichroïques comprennent des anthroquinones ou des azoïques.

Selon une autre caractéristique secondaire, le cristal liquide nématique comprend au moins l'une des molécules suivantes : phénylcyclohexane, biphénylcyclohexane, cyclohexylcyclohexane.

Les caractéristiques et avantages de l'invention ressortiront mieux de la description qui va suivre, donnée à titre illustratif mais non limitatif, en référence aux dessins annexés, dans lesquels :

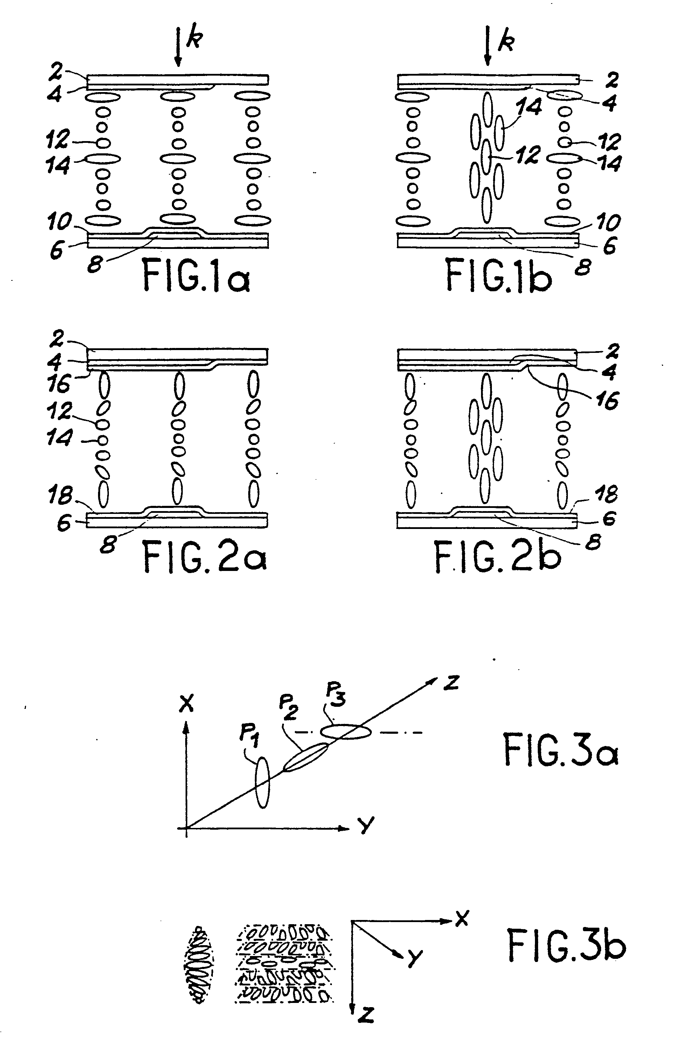

les figures 1a et 1b représentent respectivement les deux états, cholestérique et homéotrope, d'un afficheur dichroïque selon l'invention,

les figures 2a et 2b représentent respectivement les deux états, cholestérique et homéotrope, d'un afficheur dichroïque selon l'invention dans lequel la face interne des parois est recouverte d'une couche d'alignement,

le figure 3a illustre l'absorption d'un vecteur lumineux en fonction de l'orientation des molécules de colorant et la figure 3b montre les orientations différentes des molécules de colorant contenues dans différents plans du film de cristal liquide, et

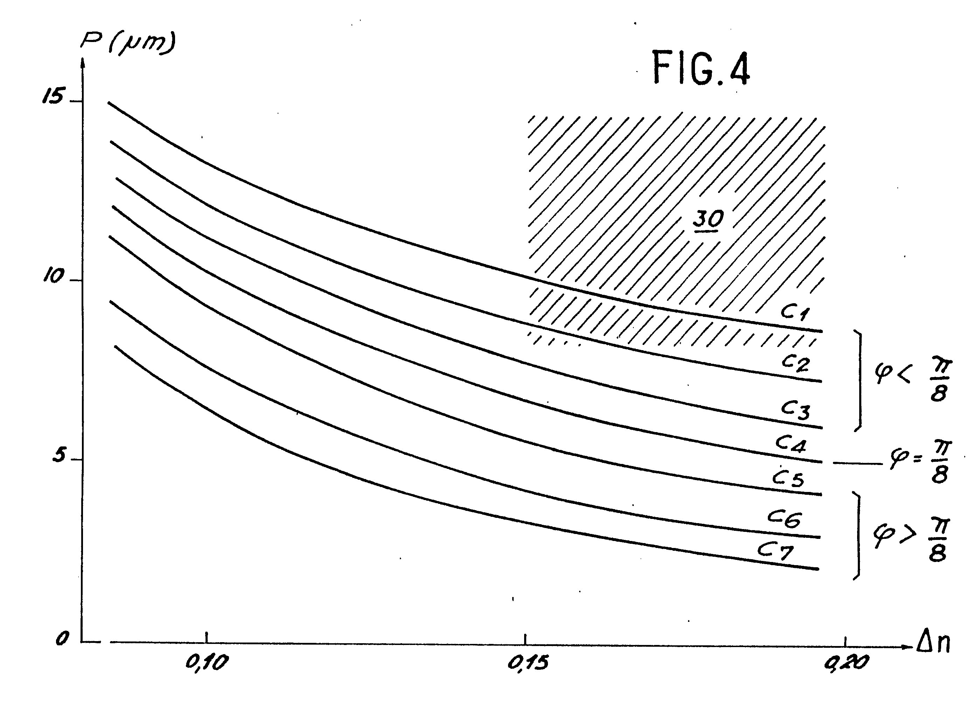

la figure 4 représente, sous la forme d'une famille de courbes, l'ellipticité de l'onde lumineuse la moins absorbée à la traversée de la cellule en fonction du pas p de la structure torsadée et de l'anisotropie optique Δn de cette cellule.

Sur les figures 1a et 1b, on a représenté une vue en coupe d'un afficheur dichroïque à cristal liquide. Il comprend une première paroi 2 portant une électrode 4 et une seconde paroi 6 portant une électrode 8 et recouverte par une couche réfléchissante 10. Entre ces deux parois, est inséré un film de cristal liquide cholestérique. Des molécules de colorant 14 sont dissoutes dans le cristal liquide afin d'augmenter le contraste de la cellule. L'orientation de ces molécules est induite par l'orientation des molécules du cristal liquide cholestérique.

Les molécules de colorant sont préférentiellement des anthroquinones ou des azoïques.

En l'absence de différence de potentiel entre les électrodes 4 et 8, le cristal liquide a une structure hélicoïdale. Les molécules de colorant se présentent donc successivement orientées suivant toutes les directions de l'espace dans un plan parallèle aux parois de la cellule. Le faisceau lumineux incident dont on a représenté le vecteur de propagation k est dans ce cas fortement absorbé car le vecteur de polarisation du faisceau lumineux est parallèle au grand axe de certaines molécules de colorant.

La figure 1b illustre l'orientation des molécules de cristal liquide et de colorant lorsqu'une différence de potentiel est appliquée entre les électrodes 4 et 8 des deux parois de la cellule à cristal liquide. Dans ce cas, les molécules de cristal liquide 12 s'orientent perpendiculairement aux parois de la cellule. Les molécules de colorant s'orientent dans le même sens. Le faisceau lumineux est dans ce cas très faiblement absorbé puisque le grand axe des molécules de colorant et le vecteur de polarisation du faisceau lumineux sont perpendiculaires.

Selon l'invention, la couche réfléchissante 10 disposée sur la face interne de l'une des parois de la cellule à cristal liquide est de type métallique. Une telle cellule à cristal liquide a un contraste nettement supérieur à celui des cellules connues. Cette amélioration du contracte n'est effective que pour certaines valeurs particulières du pas p de la structure hélicoïdale et de l'anisotropie optique Δn. On indiquera ces valeurs en référence à la figure 4.

Sur les figures 1a et 1b, la couche réfléchissante 10 recouvre la paroi inférieure de la cellule. On peut plus simplement utiliser comme couche réfléchissante l'électrode 8 en choisissant un matériau adéquat.

On va tout d'abord décrire une variante de réalisation d'une cellule à cristal liquide conforme à l'invention. Cette description va être faite en référence aux figures 2a et 2b qui représentent respectivement cette cellule à cristal liquide dans son état absorbant et dans son état transparent. Sur ces figures, les éléments identiques à ceux des figures 1a et 1b portent les mêmes références.

On a ajouté ici sur la face interne de chacune des parois une couche d'orientation 16, 18. Ces couches induisent une orientation homéotrope des molécules du cristal liquide 12 et des molécules de colorant 14 situées à proximité des parois.

En l'absence d'une différence de potentiel entre les deux parois, le film de cristal liquide a une structure hélicoïdale comme dans le cas de la figure 1a avec en outre un relèvement des cellules disposées à proximité des parois. Lorsqu'une différence de potentiel est appliquée entre les électrodes des deux parois, les molécules de cristal liquide et les molécules de colorant s'alignent perpendiculairement aux parois comme dans le cas de la figure 1b.

L'ajout de couches d'alignement 16, 18 sur la face interne des deux parois n'est pas fondamental. Ceci a cependant l'avantage de favoriser le basculement des molécules lorsqu'apparaît une différence de potentiel entre les parois.

L'absorption du faisceau lumineux par les molécules de colorant est fonction de la direction respective du vecteur polarisation de la lumière et du grand axe de la molécule de colorant. Sur la figure 3a, on a représenté une molécule de colorant dans trois positions successives $P_1$, $P_2$, $P_3$ selon l'axe Z de propagation du faisceau lumineux.

Le plan XY est parallèle aux parois de la cellule. Les positions $P_1$ et $P_3$ correspondent donc à une molécule de colorant parallèle aux parois de la cellule à cristal liquide ; la position $P_2$ correspond à une orientation perpendiculaire (homéotrope) à ces parois.

L'absorption du faisceau lumineux est maximale lorsque le vecteur de polarisation de la lumière est parallèle au grand axe de la molécule de colorant. L'absorption est minimale lorsque le vecteur de polarisation de la lumière est dans un plan perpendiculaire au grand axe de la molécule de colorant. Les coefficients d'absorption correspondants sont notés respectivement $K_a$ et $K_b$.

On appelle modes de propagation privilégiés les vecteurs lumineux qui subissent une absorption minimale ou maximale. Pour la molécule de colorant $P_1$, ces modes privilégiés sont ceux pour lesquels le vecteur de polarisation est parallèle respectivement à l'axe Y et à l'axe X.

Dans le cas d'une cellule de Heilmeier, par exemple, où toutes les molécules de colorant ont la même orientation, les modes de propagation privilégiés sont des ondes lumineuses polarisées rectilignement.

Dans le cas d'une cellule de White-Taylor telle que représentée sur la figure 3b, par exemple, la direction des molécules de colorant varie avec la profondeur dans la cellule.

Les deux modes de propagation privilégiés ne sont plus alors des ondes polarisées rectilignement, mais des ondes polarisées elliptiquement. Les coefficients d'absorption associés à ces modes sont notés respectivement $K_1$ et $K_2$. On montre qu'ils vérifient :

$$K_b < K_2 < \frac{K_a + K_b}{2} < K_1 < K_a$$

L'ellipticité des deux modes privilégiés varie en fonction de nombreux paramètres parmi lesquels
— le pas p de l'hélice,
— l'anisotropie optique $\Delta n$ du milieu,
— le vecteur de propagation dans le vide k égal à $2\pi/\lambda$, où $\lambda$ est la longueur d'onde dans le vide du faisceau lumineux,
— le vecteur de propagation dans un milieu isotrope absorbant

$$k_m = \frac{2\pi}{\lambda} \cdot n_m$$

où $n_m$ est l'indice optique complexe moyen du milieu,
— le coefficient d'atténuation.

En particulier, lorsque le pas de l'hélice diminue et/ou que l'anisotropie optique diminue, les modes de propagation privilégiés ont une ellipticité qui se rapproche de $\pi/4$ (onde circulaire).

Les coefficients d'absorption $K_1$ et $K_2$ varient également en fonction de ces paramètres. En particulier, $K_1$ augmente avec le pas p de l'hélice alors que $K_2$ diminue avec ce pas. Dans le cas limite où p est infini (cellule de Heilmeier par exemple), les coefficients $K_1$ et $K_2$ sont respectivement égaux à $K_a$ et $K_b$.

La figure 4 illustre l'ellipticité du mode de propagation le moins absorbé en fonction du pas p de l'hélice et de l'anisotropie optique $\Delta n$. Il s'agit du mode de propagation le moins absorbé à la traversée de la cellule, sans réflexion sur une paroi de la cellule.

Sur cette figure, on a représenté des courbes d'ellipticité constante $C_1$, $C_2$, ..., $C_7$. L'ellipticité des courbes croît de $C_1$ à $C_7$. Elle est inférieure à $\pi/8$ pour les courbes $C_1$, $C_2$ et $C_3$ et supérieure pour les courbes $C_5$, $C_6$ et $C_7$. La courbe $C_4$ correspond à une ellipticité de $\pi/8$ c'est-à-dire à une onde intermédiaire entre une onde rectiligne et une onde circulaire.

La zone hachurée 30 correspond au domaine classique d'utilisation des afficheurs dichroïques à cristaux liquides de type White-Taylor. Un tel afficheur comporte une couche réflectrice diffusante.

L'invention au contraire, concerne les afficheurs dichroïques à cristaux liquides tels que l'ellipticité du mode le moins absorbé soit supérieure à $\pi/8$. Ceci correspond au domaine situé sous la courbe $C_4$. Selon l'invention, ces afficheurs sont dotés d'une couche réflectrice de type métallique.

On montre, et on constate expérimentalement, que ceci permet d'améliorer sensiblement le contraste de l'afficheur. En effet, comparons l'absorption d'une onde dans le cas où la couche réflectrice est de type diffusant et dans le cas où cette couche est de type métallique. Pour cela, on va considérer la décomposition d'une onde O sur la base $(O_1, O_2)$ des modes de propagation privilégiés, $O_1$ étant l'onde la moins absorbée et $O_2$ l'onde la plus absorbée. On a donc $O = a_1 \cdot O_1 + a_2 \cdot O_2$ où $a_1$ et $a_2$ notent l'intensité de chaque composante de l'onde O.

Pour simplifier l'exposé, on va se placer dans le cas, extrême, où le coefficient d'absorption est nul pour l'onde $O_1$ et infini pour l'onde $O_2$.

Après la traversée de la cellule, le coefficient d'absorption de l'onde $O_2$ étant infini, l'onde O est réduite à sa composante la moins absorbée, c'est-à-dire $a_1 \cdot O_1$. La réflexion de cette onde sur une couche diffusante va modifier l'onde O dont l'intensité sera répartie également (propriété de la diffusion) selon les deux modes.

Juste après la réflexion, l'onde O s'écrira alors : $O = b_1 \cdot O_1 + b_1 \cdot O_2$ avec $2b2/1 = a2/1$. Lors de la seconde traversée de la cellule, la composante selon le mode le plus absorbé va disparaître, l'onde O sera alors réduite à $b_1 \cdot O_1$.

En revanche, si la couche réflectrice est du type métallique, l'onde O égale à $a_1 \cdot O_1$ après la traversée de la cellule sera, à la réflexion décomposée de manière inégale sur la base $(O_1, O_2)$. L'onde réfléchie sera alors égale à $c_1 O_1 + c_2 O_2$ avec $c2/1 + c2/2 = a2/1$, où les intensités respectives $c_1$ et $c_2$ des

composantes de l'onde réfléchie sont fonction de l'ellipticité de l'onde la moins absorbée $O_1$, c'est-à-dire fonction du pas p de l'hélice et de l'anisotropie optique $\Delta n$. Lors de la seconde traversée de la cellule, la composante selon le mode le plus absorbé $O_2$ va disparaître ; l'onde O sera alors réduite à $c_1 \cdot O_1$.

On montre que si cette ellipticité de l'onde $O_1$ est supérieure à $\pi/8$, l'intensité $c_2$ de la composante de l'onde réfléchie selon le mode le plus absorbé est supérieure à l'intensité de la composante de l'onde réfléchie selon le mode le moins absorbé. Dans le cas, l'intensité de l'onde O restante après une double traversée de la cellule sera plus faible que dans le cas d'une réflexion diffusante ($c_1 < b_1$).

Numériquement, avec une réflexion diffusante, le contraste est de l'ordre de 4 à 1, alors qu'avec une réflexion de type métallique, il peut atteindre un rapport de 10 à 1.

## Revendications

1. Afficheur dichroïque à cristal liquide à fort contraste lumineux comprenant un film de cristal liquide entre deux parois (2, 6) séparées par une cale d'épaisseur, une paroi portant des électrodes transparentes (4) et l'autre paroi une contre-électrode (8), ledit film de cristal liquide ayant une anisotropie optique $\Delta n$ et, en l'absence de champ électrique, une structure en torsade de pas p, ledit afficheur étant caractérisé en ce que la paroi portant la contre-électrode (8) est au moins partiellement recouverte par une couche réfléchissante (10) inversant la polarisation d'une onde électromagnétique polarisée circulairement et, en ce que l'anisotropie optique $\Delta n$ et le pas p sont tels qu'après une traversée du film de cristal liquide le mode de polarisation de l'onde lumineuse le moins absorbé a une ellipticité supérieure ou égale à $\pi/8$.

2. Afficheur dichroïque selon la revendication 1, caractérisé en ce que la couche réfléchissante est constituée par la contre-électrode.

3. Afficheur dichroïque selon l'une quelconque des revendications 1 et 2, caractérisé en ce que le film de cristal liquide comporte un mélange de cristal liquide nématique, de molécules de colorant et d'un composé chiral.

4. Afficheur dichroïque selon la revendication 3, caractérisé en ce que le composé chiral est un cristal liquide cholestérique.

5. Afficheur dichroïque selon la revendication 3, caractérisé en ce que les molécules de colorant comprennent des anthroquinones ou des azoïques.

6. Afficheur dichroïque selon la revendication 3, caractérisé en ce qu'il comprend au moins l'un des cristaux liquides parmi le phénylcyclohexane, le biphénylcyclohexane et le cyclohexylcyclohexane.

## Claims

1. Liquid crystal dichroic display with a high brightness contrast, comprising a liquid crystal film between two walls (2, 6) separated by a shim, one wall carrying transparent electrodes (4) and the other wall a counterelectrode (8), said liquid crystal film having an optical anisotropy $\Delta n$ and, in the absence of an electric field, a twisted or helical structure of pitch p, the wall carrying the counterelectrode (8) being at least partly covered with a reflecting coating (10) reversing the polarization of a circularly polarized electromagnetic wave and the optical anisotropy $\Delta n$ and the pitch p being such that after traversing the liquid crystal film the polarizing mode of the light wave absorbed least has an ellipticity at least equal to $\pi/8$.

2. Dichroic display according to claim 1, characterized in that the reflecting coating is constituted by the counterelectrode.

3. Dichroic display according to claims 1 or 2, characterized in that the liquid crystal film comprises a mixture of a nematic liquid crystal, dye molecules and a chiral compound.

4. Dichroic display according to claim 3, characterized in that the chiral compound is a cholesteric liquid crystal.

5. Dichroic display according to claim 3, characterized in that the dye molecules comprise anthroquinones or azo compounds.

6. Dichroic display according to claim 3, characterized in that at least one of the liquid crystals comprises phenylcyclohexane, biphenylcyclohexane and cyclohexylcyclohexane.

## Patentansprüche

1. Dichroitische Anzeigevorrichtung as Flüssigkristallen mit starkem Lichtkontrast, enthaltend einen Flüssigkristallfilm zwischen zwei Platten (2, 6) dir durch eine Zwischenlage voneinander getrennt sind, wobei eine Platte transparente Elektroden (4) und die andere Platte eine Gegenelektrode (8) trägt, welcher Flüssigkristallfilm eine optische Anisotropie $\Delta n$ und bei Abwesenheit eines elektrischen Feldes eine Verdrehstruktur der Teilung p aufweist, dadurch gekennzeichnet, daß die die Gegenelektrode (8) tragende Platte wenigstens teilweise von einer reflektierenden Schicht (10) bedeckt ist, die die

**EP 0 167 424 B1**

Polarisation einer zirkularpolarisierten elektromagnetischen Welle umkehrt, und daß die optische Anisotropie Δn und die Teilung p derart sind, daß nach einem Durchgang durch den Flüssigkristallfilm der Polarisationsmode der am wenigsten absorbierten Lichtwelle eine Elliptizität von mehr oder gleich π/8 hat.

2. Dichroitische Anzeigevorrichtung nach Anspruch 1, dadurch gekennzeichnet, daß die reflektierende Schicht von der Gegenelektrode gebildet ist.

3. Dichroitische Anzeigevorrichtung nach einem der Ansprüche 1 und 2, dadurch gekennzeichnet, daß der Flüssigkristallfilm eine Mischung aus einer nematischen Kristallflüssigkeit, Farbmolekülen und einer Chiralverbindung enthält.

4. Dichroitische Anzeigevorrichtung nach Anspruch 3, dadurch gekennzeichnet, daß die Chiralverbindung eine cholesterische Kristallflüssigkeit ist.

5. Dichroitische Anzeigevorrichtung nach Anspruch 3, dadurch gekennzeichnet, daß die Farbmoleküle Anthrochinone oder Azoverbindungen enthalten.

6. Dichroitische Anzeigevorrichtung nach Anspruch 3, dadurch gekennzeichnet, daß sie wenigstens eines der Flüssigkristalle von Phenylcyclohexan, Biphenylcyclohexan und Cyclohexylcyclohexan enthält.

FIG.1a

FIG.1b

FIG.2a

F.IG.2b

FIG.3a

FIG.3b

FIG.4

EP 0 167 424 B1